# EUROPÄISCHE PATENTSCHRIFT

(11) **EP 2 737 098 B1**
(45) Veröffentlichungstag und Bekanntmachung des Hinweises auf die Patenterteilung: **24.03.2021**
(21) Anmeldenummer: 12740596.7
(22) Anmeldetag: 27.07.2012
(51) Int. Cl.: C22C 38/22, C22C 38/26

(54) **BAUTEIL UND VERFAHREN ZUM HERSTELLEN DES BAUTEILS**
COMPONENT AND METHOD FOR PRODUCING THE COMPONENT
ÉLÉMENT ET PROCÉDÉ DE FABRICATION DE L'ÉLÉMENT

(30) Priorität: 28.07.2011 DE 102011079954
(43) Veröffentlichungstag der Anmeldung: 04.06.2014
(73) Patentinhaber: Aktiebolaget SKF (publ), 415 50 Göteborg (SE)
(72) Erfinder: GEGNER, Jürgen, 91301 Forchheim (DE); KAISER, Tristan, 74388 Talheim (DE)
(74) Vertreter: Kuhstrebe, Jochen
(86) Internationale Anmeldenummer: PCT/EP2012/064804
(87) Internationale Veröffentlichungsnummer: WO 2013/014279

(56) Entgegenhaltungen:
- EP-A1- 1 741 798
- EP-A1- 2 218 802
- EP-A1- 2 270 245
- EP-A1- 2 594 654
- EP-A2- 1 413 631
- DE-A1- 10 243 179
- DE-A1- 19 620 914
- GB-A- 2 310 466
- US-A- 3 884 730
- US-A1- 2010 150 489

## Beschreibung

Ausführungsbeispiele der vorliegenden Erfindung betreffen ein Bauteil und ein Verfahren zum Herstellen des Bauteils, beispielsweise einer Wälzlagerkomponente.

Bei vielen Maschinen und Anlagen treten hohe mechanische Belastungen in unterschiedlichen Formen und Ausprägungen auf. Häufig, aber bei Weitem nicht ausschließlich, sind hier gerade Bauteile betroffen, die zueinander Relativbewegungen ausführen, also beispielsweise translatorische oder rotatorische Bewegungen. Hierbei können neben Dauerbelastungen auch kurzzeitige und/oder lokale Belastungen auftreten, die zu einer Ermüdung oder statischen Überbeanspruchung der betreffenden Bauteile führen können.

Gerade für solche Bauteile (z. B. Maschinenteile) findet Stahl aufgrund seiner weitreichenden Konfektionierbarkeit, seiner Festigkeit, seiner Verformbarkeit, seiner Schweißeignung und vieler anderer Eigenschaften Anwendung. Zu den wichtigen technologischen Eigenschaften zählt auch, dass Stahl, die vollständig oder auch teilweise gehärtet werden kann. Wird beispielsweise nur eine Randhärtung oder Oberflächenhärtung durchgeführt, wird so die entsprechend behandelte Oberfläche härter und daher mechanisch und tribologisch widerstandsfähiger, während tiefer liegende Bereiche des Bauteils eine geringere Härte und daher eine größere Zähigkeit aufweisen, wodurch das Bauteil insgesamt zyklisch und statisch höher belastbar wird.

Dynamische Belastungen werden häufig über die Oberfläche der Bauteile in diese eingeleitet, wirken also gerade auf die typischerweise gehärteten Bereiche stark ein. Durch diese können Versetzungsbewegungen im Material hervorgerufen werden, die letztendlich zu plastischen Verformungen im Inneren des Bauteils führen können. Diese beanspruchen häufig gerade den Bereich von Korngrenzen im Gefüge von Stahl, was bei anfälligem Werkstoffzustand zu einem interkristallinen Bruch vor Erreichen der Festigkeit im Volumen führen kann.

Um dem entgegenzuwirken, werden bevorzugt Stähle eingesetzt, die über eine große Anzahl von Korngrenzen verfügen, also kleine Kristalle im Gefüge aufweisen, da hierdurch die mechanischen Belastungen und Belegung (Segregation) mit schwächenden Elementen (z. B. Phosphor, Schwefel) oder auch Verbindungen (z. B. Karbide) auf eine größere Anzahl und damit Fläche von Korngrenzen verteilt werden und die Beanspruchung der einzelnen Korngrenzen abnimmt.

Allerdings erfolgt die Härtung des Stahls im Randbereich typischerweise thermisch, wobei der Stahl des Bauteils entsprechend stark erhitzt wird. Dies kann beispielsweise durch Flamm- oder Induktionshärtung erfolgen, also beispielsweise durch eine induktive Erwärmung des Werkstücks.

Das Härten stellt einen thermisch induzierten Prozess dar, sodass es insbesondere bei größeren Randhärtungstiefen zu einer unerwünschten Erwärmung oberhalb der Austenittemperatur des Stahls und damit zu einem Überhitzen des Gefüges kommen kann. Infolge dessen tritt ein verstärktes Kornwachstum, also eine Grobkornbildung auf. Dies kann im späteren Einsatzgefüge zu einer verminderten Festigkeit durch eine Schwächung der Korngrenzen (z. B. durch Segregation, d. h. Anlagerung schädlicher Elemente), mit einer Tendenz zum interkristallinen Bruch führen.

Bisher wurden hierzu Stähle mit einem Kohlenstoffgehalt von maximal 1,1 Gewichtsprozent (Gew.-%) und einer hinreichenden Randschichthärtbarkeit verwendet, die durch die Legierungszusammensetzung beeinflusst wird. Ferner wird versucht, den Härtungsprozess so zu führen, dass ein übermäßiges Kornwachstum vermieden wird.

Patentdokument EP1413631 A2 offenbart ein Wälzlager, das M50 Stahl und M50NiL Stahl aufweist.

Patentdokument US2010150489 A1 offenbart ein Rillenkugellager.

Patentdokument DE19620914 A1 offenbart Einlaßventile in Verbrennungsmotoren.

Patentdokument DE10243179 A1 offenbart einen Einsatzstahl für das Direkthärten nach dem Aufkohlungsvorgang.

Patentdokument GB2310466 A offenbart ein Wälzlager aus einer Stahllegierung.

Patentdokument US3884730 A offenbart ein Maschinenelement aus Stahl.

Patentdokument EP 2 594 654 A1 offenbart Stahl für Maschinenstrukturen.

Patentdokument EP 1 741 798 A1 offenbart eine Komponente für den Machineneinsatz.

Patentdokument EP 2 270 245 A1 offenbart einen Stahl mit einer bestimmten Zusammensetzung.

Patentdokument EP 2 218 802 A1 offenbart einen Stahl mit einer bestimmten Zusammensetzung.

Ausgehend hiervon besteht daher die Aufgabe der vorliegenden Erfindung darin, ein Bauteil und ein Verfahren zum Herstellen eines Bauteils zu schaffen, wobei das Bauteil eine verbesserte Ermüdungsresistenz und/oder statische Festigkeit aufweist.

Diese Aufgabe wird durch ein Bauteil gemäß Anspruch 1 oder ein Verfahren zum Herstellen eines Bauteils gemäß Anspruch 4 gelöst.

Ein Ausführungsbeispiel eines Bauteils weist wenigstens in einem Abschnitt Stahl auf, wobei sich der Abschnitt von einer Oberfläche des Bauteils in ein Inneres des Bauteils erstreckt, wobei das Bauteil in dem Abschnitt eine Randhärtung ausgehend von der Oberfläche des Bauteils aufweist, und wobei der Stahl 50CrMo4 oder 43CrMo4 ist, der mit einem zusätzlichen Legierungselement legiert ist, wobei das zusätzliche Legierungselement Tantal, Niob, Titan oder Vanadium ist, und wobei der Stahl das zusätzliche Legierungselement mit einem Anteil zwischen 0,01 und 2 Gewichtsprozent aufweist.

Ein Ausführungsbeispiel eines Verfahrens zum Herstellen eines Bauteils umfasst ein Bereitstellen eines Bauteils, das wenigstens in einem Abschnitt Stahl aufweist, wobei sich der Abschnitt von einer Oberfläche des Bauteils in ein Inneres des Bauteils erstreckt, wobei der Stahl 50CrMo4 oder 43CrMo4 ist, der mit einem zusätzlichen Legierungselement legiert ist, wobei das zusätzliche Legierungselement Tantal, Niob, Titan oder Vanadium ist, und wobei der Stahl das zusätzliche Legierungselement mit einem Anteil zwischen 0,01 und 2 Gewichtsprozent aufweist.

Ausführungsbeispiele des Verfahrens umfassen ferner ein Durchführen einer Randhärtung in dem Abschnitt, sodass sich ein Randhärtungsbereich in dem Abschnitt des Bauteils ausgehend von der Oberfläche bildet.

Ausführungsbeispielen der Erfindung liegt die Erkenntnis zugrunde, dass eine verbesserte Ermüdungsresistenz eines Bauteils durch eine verbesserte Härtbarkeit und/oder eine verbesserte Kornstabilität während der Wärmebehandlung beim Härten erzielbar ist. Hierzu wird ein Bauteil geschaffen, das wenigstens einen Abschnitt aufweist, der einen oberflächenhärtbaren Stahl aufweist.

In weiteren Ausführungsbeispielen der vorliegenden Erfindung kann durch die Verwendung des zuvor beschriebenen Stahls gegebenenfalls eine verbesserte Härtbarkeit und/oder eine verbesserte Kornstabilität und/oder statische Festigkeit derart erzielbar sein, sodass eine Randhärtung mit einer größeren Randhärtungstiefe von wenigstens 5 mm in wenigstens dem Abschnitt des Bauteils durch die (z. B. induktive) Härtung erzielt werden kann, ohne dass hierbei eine verstärkte Grobkornbildung einsetzt, die die Ermüdungsresistenz und/oder statische Festigkeit des Werkstoffs nachteilig beeinflussen könnte. Als Randhärtungstiefe soll der senkrechte Abstand zur Oberfläche bis zum Erreichen einer Grenzhärte von 550 HV1 (52,5 HRC) verstanden werden.

Hierbei werden im Rahmen der vorliegenden Beschreibung Angaben nomineller Gewichtsprozente bezüglich der einzelnen Anteile verwendet. Bei Stählen können aufgrund der produktionsbedingten Abläufe der Stahlherstellung Abweichungen von den nominellen Anteilen auftreten. Der Anteil eines Legierungselements oder einer anderen Komponente (z. B. Kohlenstoff) eines Stahls eines konkreten Ausführungsbeispiels kann also die nominellen Werte im Rahmen der üblichen Fertigungsund Herstellungstoleranzen gegebenenfalls unter- oder überschreiten. Ausführungsbeispiele der vorliegenden Erfindung werden nachfolgend unter Bezugnahme auf die beiliegenden Figuren erläutert.
Fig. 1 zeigt einen Querschnitt durch ein Bauteil gemäß einem Ausführungsbeispiel der vorliegenden Erfindung;
Fig. 2 zeigt einen Querschnitt durch ein Kegelrollenlager mit Bauteilen gemäß Ausführungsbeispielen der vorliegenden Erfindung;
Fig. 3 zeigt eine schematische Querschnittsdarstellung durch ein Bauteil gemäße einem Ausführungsbeispiel der vorliegenden Erfindung während der Randhärtung; und
Fig. 4 illustriert einen Verlauf einer Härte durch ein Bauteil gemäß einem Ausführungsbeispiel der vorliegenden Erfindung als Funktion eines Abstands von der Oberfläche des Bauteils.

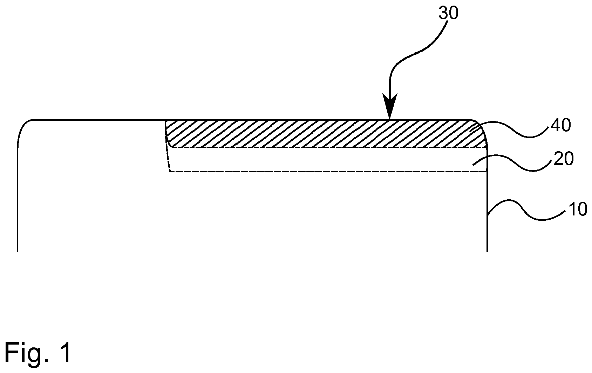

Im Folgenden werden unter Bezugnahme auf die Figuren 1 bis 4 Ausführungsbeispiele der vorliegenden Erfindung näher beschrieben und erläutert.

Fig. 1 zeigt eine Querschnittsdarstellung durch ein Bauteil 10 gemäß einem ersten Ausführungsbeispiel der vorliegenden Erfindung. Bei dem Bauteil 10 kann es sich beispielsweise um eine Wälzlagerkomponente, also beispielsweise um einen Wälzlagerring (u. a. Außen- oder Innenring) oder auch um einen Wälzkörper (u. a. ein Zylinderrolle, Kugel und Kegelrolle) handeln. Das Bauteil 10 weist hierbei einen Abschnitt 20 auf, der sich von einer Oberfläche 30 des Bauteils in ein Inneres des Bauteils 10 erstreckt. Der Abschnitt 20 weist hierbei einen Stahl auf, der weiter unten näher beschrieben wird.

Durch eine Randhärtung, also beispielsweise eine Flammhärtung oder eine Induktivhärtung, weist der Abschnitt 20 ferner eine Randhärtung bzw. Randhärtungszone 40 auf, die sich von der Oberfläche 30 des Bauteils 10 ausgehend in das Innere des Bauteils 10 hinein erstreckt. Bei Ausführungsbeispielen der vorliegenden Erfindung kann sich dieser beispielsweise wenigstens 5 mm, bei anderen Ausführungsbeispielen aber auch wenigstens 6 mm, 7 mm, 8 mm, 9 mm oder 10 mm oder mehr erstrecken. Diese großen Randhärtungstiefen werden insbesondere durch den verwendeten Stahl ermöglicht.

Wie einleitend bereits beschrieben wurde, treten bei vielen Anwendungen starke mechanische Belastungen auf, die zu einer Ermüdung des betreffenden Bauteils führen. Häufig handelt es sich bei diesen Belastungen um kurzzeitig, intermittierend oder periodisch auftretende dynamische Belastungen, die häufig auch nur auf kleine Gebiete des Bauteils einwirken, also beispielsweise über einen punkt- oder linienförmigen Kontakt.

Um die entsprechenden Bauteile resistenter gegen Ermüdungserscheinungen auszulegen, werden daher häufig gehärtete Stähle eingesetzt, insbesondere oberflächengehärtete Stähle. Wie eingangs ebenfalls beschrieben wurde, werden hier insbesondere Stähle bevorzugt, die geringe Korngrößen aufweisen, um auftretende mechanische Belastungen und schwächende Segregations- bzw. Ausscheidungsbelegungen auf eine große Anzahl und damit Fläche von Korngrenzen zu verteilen.

Beim Induktionshärten oder auch beim Flammhärten wird daher ein Werkstück lokal häufig auf eine Temperatur von mehr als 1000 °C erwärmt, indem es von außen (Flammhärten) oder durch in einer äußeren Schicht des Werkstücks nahe der Oberfläche erzeugte Wirbelströme (Induktionshärten) erhitzt wird. Typischerweise werden hierbei lokal Temperaturen von bis 1150 °C erreicht. Hierbei kann es jedoch leicht zu einem Überhitzen des Gefüges kommen, was wiederum zu der eingangs beschriebenen Grobkornbildung und damit häufig verbundenen Korngrenzensegregationen und so zu einer Reduzierung der Ermüdungsresistenz und statischen Festigkeit des Werkstoffs und Bauteils führen kann.

Gemäß Referenzbeispielen kann jedoch eine Verbesserung der Kornstabilität und/oder der Härtbarkeit bei der Wärmebehandlung durch den Einsatz eines Stahls erzielt werden, der neben einem Anteil an Kohlenstoff (C) von wenigstens 0,25 Gewichtsprozent und höchstens 1,55 Gewichtsprozent einen Anteil eines ersten Legierungselements aufweist, der zwischen 0,1 und 2 Gewichtsprozent liegt. Das erste Legierungselement ist hierbei Nickel (Ni), Silizium (Si), Mangan (Mn), Chrom (Cr) oder Molybdän (Mo). Der Stahl umfasst ferner ein zweites (Mikro-) Legierungselement mit einem Anteil zwischen 0,01 und 2 Gewichtsprozent, bei dem es sich um Niob (Nb), Tantal (Ta), Titan (Ti) oder Vanadium (V) handelt.

Durch die Verwendung dieses Stahls als Werkstoff kann es beispielsweise auch möglich sein, die zuvor genannten Randhärtungstiefen von mehr als 5 mm zu erzielen und dabei das Gefüge während der Randhärtung kornstabiler zu halten, was beispielsweise im Wälzlagerbereich bei Großlagerringen, aber auch bei Wälzkörpern vorteilhaft sein kann. Je nach konkreter Zusammensetzung eines Stahls gemäß einem Ausführungsbeispiel der vorliegenden Erfindung können so Randhärtungstiefen von 10 mm und gegebenenfalls darüber erzielt werden.

Allerdings sind Referenzbeispiele nicht auf solche Bauteile mit einer Randhärtungstiefe von wenigstens 5 mm beschränkt. Es können gemäß Referenzbeispielen ebenso Bauteile mit geringeren oder größeren Randhärtungstiefen realisiert werden, also beispielsweise von wenigstens 100 µm, wenigstens 1 mm oder von wenigstens einer der weiteren, hier im Rahmen der vorliegenden Beschreibung genannten möglichen Randhärtungstiefen. Wird bei Referenzbeispielen der Kohlenstoffanteil des Stahls auf Werte von wenigstens 0,25 Gewichtsprozent und höchstens 1,1 Gewichtsprozent oder sogar höchstens 0,6 Gewichtsprozent reduziert, kann dies gegebenenfalls zu einer weiter verbesserten Randhärtbarkeit führen, die größere Randhärtungstiefen erlaubt und so die Gefahr des Aufschmelzens des Gefüges verringert.

Eine Variation des Kohlenstoffanteils im Bereich zwischen etwa 0,4 und etwa 0,55 Gew.-%, also beispielsweise von etwa 0,45 Gew.-%, kann dem Stahl zusätzlich vorteilhafte Eigenschaften verleihen, wie etwa eine verbesserte induktive Lötbarkeit.

So ermöglichen es Ausführungsbeispiele der vorliegenden Erfindung, die zur Randhärtung verwendeten Temperaturen zu erhöhen und so die zuvor genannte Gefahr der Grobkornbildung zu vermindern. Durch den Einsatz von Stählen gemäß Ausführungsbeispielen der vorliegenden Erfindung kann so gegebenenfalls die zur Härtung erforderliche Temperatur in den Bereich oberhalb von 1000 °C erhöht werden.

Je nach Menge des hinzulegierten Tantals spricht man von einer Legierung oder auch einer Mikrolegierung. Im Bereich der so genannten Mikrolegierung liegt der Anteil des Legierungsmetalls in einem Bereich, der typischerweise nicht spezifiziert wird. Im Fall von Tantal ist dies im Allgemeinen der Bereich unterhalb von 0,1 Gew.-%. Im Bereich des Anteils von Tantal von 0,1 Gew.-% und darüber wird dieser gewöhnlich spezifiziert, sodass das Hinzufügen des Legierungselements in diesem Bereich als Legieren bezeichnet wird. Unabhängig hiervon wird jedoch im Rahmen der vorliegenden Beschreibung unter dem Begriff des Legierens sowohl der des Mikrolegierens wie auch der des Legierens verstanden.

Bei Referenzbeispielen kann ferner zu Molybdän (Mo) mit einem Gewichtsanteil zwischen 0,1 und 5 Gewichtsprozent das erste Legierungselement mit einem der anderen zuvor genannten Legierungselemente mit einem Gewichtsanteil zwischen 0,1 und 5 Gewichtsprozenten hinzutreten. In diesem Fall ist also das erste Legierungselement Nickel (Ni), Silizium (Si), Mangan (Mn) oder Chrom (Cr).

Bei Referenzbeispielen liegt der Gewichtsanteil für die ersten Legierungselemente häufig im Bereich zwischen 0,8 Gew.-% und 1,5 Gew.-%. So kann beispielsweise Stahl gemäß einem Ausführungsbeispiel der vorliegenden Erfindung auf Basis von 50CrMo4 oder 43CrMo4 als Basislegierung erzeugt werden. Weitere Beispiele sind Stähle gemäß Referenzbeispielen auf Basis von 50CrV4. Wie diese Basislegierungen zum Teil also ebenfalls zeigen, kann bei Ausführungsbeispielen auch eine Mehrzahl der vorgenannten Legierungselemente zum Einsatz kommen.

Häufig ist bei Stählen mit Niobanteil (Nb) der Gewichtsanteil des Tantals (Ta) wenigstens das 1-fache, wenigstens das 5-fache, wenigstens das 10-fache, wenigstens das 20-fache, wenigstens das 50-fache oder wenigstens das 100-fache des Gewichtsanteils von Niob (Nb). In diesen Verhältnissen der Massen von Niob (Nb) und Tantal (Ta) kommt zum Ausdruck, dass Niob sehr häufig als Kontamination bzw. zusätzliches Element von Tantal auftritt. Gerade im Hinblick auf die verbesserte Härtbarkeit und die damit möglichen positiven Auswirkungen auf den Stahl und die diesen umfassende Bauteile deuten Untersuchungen daraufhin, dass Tantal (Ta) zu einer besseren Härtbarkeit des Stahls als Niob führt. Auch wenn Niob scheinbar keine gravierend negativen Auswirkungen zeigt, deuten die Untersuchungen daraufhin, dass Tantal Niob gegenüber zu einer besseren Härtbarkeit führen könnte. In diesem Zusammenhang wird die Möglichkeit erörtert, ob dies gegebenenfalls auf eine Bildung von Tantalkarbid (TaC) im Gefüge zurückzuführen sein könnte. So besteht zunächst das Bestreben, den Niobanteil im Vergleich zu dem Tantalanteil zu beschränken. Bei besonders hochwertigen Anwendungen kann daher auch ein Tantalanteil von wenigstens einem 120-fachen, wenigstens einem 150-fachen oder wenigstens einem 200-fachen des Niobanteils entsprechen, wobei diese Verhältnisse bereits stark an der Grenze der technischen Separationsmöglichkeit der beiden Elemente angesiedelt sind. Aufgrund der scheinbar nicht stark nachteiligen Wirkung des Niobs (Nb) kann es daher aus ökonomischen und beschaffungstechnischen Gründen, sowie aus Gründen der eigentlichen Stahlherstellung geeigneter sein, einen gewissen Niobanteil zu tolerieren, um den Prozess der Stahlherstellung zu vereinfachen und/oder technisch stabiler zu halten.

Im Hinblick auf Chrom (Cr) kann es gegebenenfalls ratsam sein, bei Referenzbeispielen den Chromanteil auf maximal 5 Gewichtsprozent, auf maximal 3,8 Gewichtsprozent oder auf maximal 2,1 Gewichtsprozent zu begrenzen. So kann hierdurch gegebenenfalls eine Konkurrenzsituation bei der Bildung von Karbiden oder anderen kohlenstoffhaltigen Verbindungen, Komplexen oder Anlagerungen zwischen Tantal und Chrom unterbunden werden. Auch kann es ratsam sein, Molybdän (Mo) mit einem Gewichtsanteil von bis zu 0,6 Gewichtsprozent beizufügen.

Im Hinblick auf weitere Elemente umfasst ein Stahl gemäß einem Referenzbeispiel häufig außer Eisen (Fe) keine weiteren Legierungselemente (d. h. Kohlenstoff ausgenommen) mit einem jeweiligen Anteil von mehr als 0,2 Gew.-%, wobei ein Gesamtanteil der weiteren Elemente insgesamt 10 Gew.-% nicht übersteigt. Bei reineren Ausführungen von Stählen können diese Grenzen auch bei 0,1 Gew.-% bzw. 5 Gew.-% liegen.

Lediglich der Vollständigkeit halber bietet es sich an dieser Stelle an, darauf hinzuweisen, dass unter einem Stahl ein Werkstoff zu verstehen ist, dessen Massenanteil an Eisen (Fe) größer ist als der jedes anderen Elements, dessen Kohlenstoffgehalt im Allgemeinen kleiner als 2 Gew.-% ist und andere Elemente enthalten kann. Referenzbeispiele des Stahls weisen einen Kohlenstoffanteil auf, der wenigstens 0,25 Gewichtsprozent beträgt, 1,55 Gewichtsprozent jedoch nicht übersteigt. So kann gegebenenfalls eine ausreichende Menge Kohlenstoff zur Karbidbildung bereitgestellt werden. Insbesondere kann bei Stählen gemäß einem Referenzbeispiel eine Erhöhung des Kohlenstoffanteils so gegebenenfalls vermieden werden. Unabhängig hiervon kann es jedoch bei Referenzbeispielen ebenso ratsam sein, den Kohlenstoffanteil auf höchstens 1,1 Gewichtsprozent oder auf 0,6 Gewichtsprozent zu beschränken. Hierdurch kann gegebenenfalls eine gezieltere Karbidbildung bewirkt werden.

Ein Stahl gemäß einem Ausführungsbeispiel kann als Wälzlagerstahl ausgeführt sein, wie er beispielsweise in der ISO 683-17:1999 definiert ist. Ein solcher induktionshärtbarer Stahl auf Basis einer 43CrMo4-Basislegierung gemäß einem Ausführungsbeispiel kann beispielsweise eine oder mehrere Härtewerte erreichen, wie sie in nachfolgend wiedergegebenen Tabelle 1 aufgeführt sind. Tabelle 1 stellt hierbei einen für eine typische Stahllegierung minimalen HRC-Wert (HRCₘᵢₙ) und einen für eine typische Stahllegierung maximalen HRC-Wert (HRCₘₐₓ) in Abhängigkeit eines Abstands d von einer abgeschreckten Stirnfläche in mm einander gegenüber. Die Härtbarkeit kann hierbei durch Stirnabschreckversuche nach Jominy bei verschiedenen Stirnflächenabständen gemessen werden.

**Tabelle 1:**

| **d [mm]** | **HRCₘₐₓ** | **HRCₘᵢₙ** |
|---|---|---|
| 1,5 | 61 | 53 |
| 3 | 61 | 53 |
| 5 | 61 | 52 |
| 7 | 60 | 51 |
| 9 | 60 | 49 |
| 11 | 59 | 43 |
| 13 | 59 | 40 |
| 15 | 58 | 37 |
| 20 | 56 | 34 |
| 25 | 53 | 32 |
| 30 | 51 | 31 |
| 35 | 48 | 30 |
| 40 | 47 | 30 |
| 45 | 46 | 29 |
| 50 | 45 | 29 |

Die Härtewerte sind hierbei nach Rockwell gemäß der HRC-Skala angegeben werden. Je nach genauer Legierungszusammensetzung können auch hiervon abweichende HRC-Werte erzielbar sein. So können gegebenenfalls auf Basis der genannten Basislegierung 43CrMo4 auch HRC-Werte erzielbar sein, die 2 oder 3 HRC-Werte über oder unter den genannten minimalen und/oder maximalen HRC-Werten HRCₘₐₓ bzw. HRCmin liegen.

Je nach verwendetem Stahl gemäß Ausführungsbeispielen der vorliegenden Erfindung können so Härten beginnend bei 20 HRC im Falle eines Stahls mit einem Kohlenstoffanteil von 0,25 Gew.-% bis hin zu 70 HRC bei einem Stahl mit einem Kohlenstoffanteil von 1,55 Gew.-% erzielt werden.

So kann bei einem Stahl gemäß einem Ausführungsbeispiel - beispielsweise auf Basis einer 50CrMo4-Basislegierung - ein oder mehrere Härtewerte gemäß der folgenden, in Tabelle 2 angegebenen minimalen und maximalen HRC-Werte HRCₘᵢₙ bzw. HRCₘₐₓ in Abhängigkeit des Abstands d von der abgeschreckten Stirnfläche in mm erzielbar sein.

**Tabelle 2:**

| **d [mm]** | **HRCₘₐₓ** | **HRCₘᵢₙ** |
|---|---|---|
| 1,5 | 65 | 60 |
| 3 | 65 | 60 |
| 5 | 64 | 59 |
| 7 | 64 | 58 |
| 9 | 63 | 57 |
| 11 | 63 | 56 |
| 13 | 63 | 55 |
| 15 | 62 | 53 |
| 20 | 61 | 50 |
| 25 | 60 | 47 |
| 30 | 58 | 45 |
| 35 | 57 | 44 |
| 40 | 55 | 43 |
| 45 | 54 | 42 |
| 50 | 54 | 42 |

Auch hier können in Abhängigkeit der genauen Legierungszusammensetzung und auch gegebenenfalls auf Basis anderer Basislegierungen entsprechende minimale und maximale HRC-Werte HRCₘᵢₙ- bzw. HRCₘₐₓ-Werte erzielbar sein, die 2 oder 3 HRC-Stufen bzw. -Werte über oder unter den in Tabelle 2 angegebenen Werten liegen. Die Härtbarkeit kann auch hier durch Stirnabschreckversuche nach Jominy bei verschiedenen Stirnflächenabständen gemessen werden.

Wie bereits zuvor erläutert, weisen Stähle, die bei Ausführungsbeispielen der vorliegenden Erfindung zum Einsatz kommen, ein vermindertes Kornwachstum bei der Wärmebehandlung und damit (im Allgemeinen) eine geringe Korngröße auf. Gemäß ASTM-Standard E 112 (ASTM = American Society for Testing Materials) weisen sie Gefüge mit Körnern mit einer Kennzahl von 5, 6, 7 oder darüber auf. Hierbei wird nach der Präparation eines Schliffs ein Foto in einer Vergrößerung von 100:1 mit verschiedenen Standardbildern verglichen. Der Klasse 5 entsprechen hierbei Körner mit einem mittleren Durchmesser von etwa 60 µm, denen der Klasse 6 solchen mit einem mittleren Durchmesser von etwa 45 µm, denen der Klasse 7 solchen mit einem mittleren Durchmesser von etwa 35 µm und denen der Klasse 8 solchen mit einem mittleren Durchmesser von etwa 22 µm. Als Korngröße und Korngrenzen werden bei Stählen die Größe bzw. Korngrenzen der ehemaligen Austenitkörner bezeichnet.

Hinsichtlich der Mikrostruktur nichtmetallischer Einschlüsse können Ausführungsbeispiele von Stählen beispielsweise unter Ausnutzung der in den Standards ASTM E45 und ISO 4967 sowie DIN 50602:1985 definierten Messmethoden quantifiziert werden. Auch bei diesen Verfahren werden Schliffe angefertigt, und in einer 100:1-fachen Vergrößerung mit Standardbildern verglichen. Ausführungsbeispiele können gemäß der folgenden Mikrostrukturklassen oder besser bereitgestellt werden. Tabelle 3 zeigt hierbei nichtmetallische Einschlüsse gemäß ASTM E45 und ISO 4967, die Ausführungsbeispiele erreichen können.

**Tabelle 3:**

| **Jernkontret Standarddiagramm** | |
|---|---|
| A (fein bzw. dünn) | 2,5 |
| A (dick) | 1,5 |
| B (fein bzw. dünn) | 2,0 |
| B (dick) | 1,0 |
| C (fein bzw. dünn) | 0,5 |
| C (dick) | 0,5 |
| D (fein bzw. dünn) | 1,0 |
| D (dick) | 1,0 |

Entsprechend zeigt Tabelle 4 nichtmetallische Einschlüsse gemäß DIN 50602:1985, die Ausführungsbeispiele erreichen können. Hierbei werden Stabdurchmesser d in mm charakteristischen kumulierten K-Werten gegenüber gestellt.

**Tabelle 4:**

| **d [mm]** | **K-Faktor** |
|---|---|
| 200 < d | K4 ≤ 20 |
| 140 < d ≤ 200 | K4 ≤ 18 |
| 100 < d ≤ 140 | K4 ≤ 16 |

| 70 < d ≤ 100 | K4 ≤ 14 |
|---|---|
| 35 < d ≤ 70 | K4 ≤ 12 |
| 17 < d ≤ 35 | K3 ≤ 15 |
| 8 < d ≤ 17 | K3 ≤ 10 |
| d ≤ 8 | K2 ≤ 12 |

Diese Stähle können beispielsweise in einem Verfahren hergestellt werden, das zwei Schritte umfasst, die gleichzeitig oder auch aufeinanderfolgend ausgeführt werden können. Hierbei wird in einem ersten Schritt eine Basislegierung des Stahls bereitgestellt, die dann in einem zweiten Schritt mit dem ersten und dem zweiten Legierungselement legiert wird.

Grundsätzlich können sie mithilfe aller Verfahren hergestellt werden, auch wenn aufgrund ökonomischer und/oder prozessbedingter Eigenschaften einzelne Verfahren eher in Randgebieten zum Einsatz kommen. So ist es möglich, beide Verfahrensschritte beispielsweise im Fall nur geringer zu produzierenden Tonnagen im Rahmen des Tiegelstahlverfahrens oder des Elektrostahlverfahrens durchzuführen, wobei die Legierungselemente in chemisch reiner Form (z. B. metallischer Form), beispielsweise als Pulver oder als Granulat (Stückchen), oder als chemische Verbindung hinzugegeben wird.

Die Verfahrensschritte können jedoch auch sequenziell erfolgen. So kann der Schritt des Bereitstellens der Basislegierung beispielsweise die Bereitstellung von Roheisen in einer Hochofenroute, aber auch mittels anderer Verfahren umfassen. Das Roheisen kann dann im Rahmen eines Blasverfahrens (z. B. LD-Verfahren oder Linz-Donawitz-Verfahren) oder eines Herdfrischverfahrens (z. B. Siemens-Martin-Verfahren) zu Stahl weiterverarbeitet werden. Als optionalen weiteren Schritt kann das Bereitstellen der Basislegierung ferner ein Frischen umfassen, das zu einer Anpassung (im Allgemeinen einer Senkung) des Gehalts von Elementen wie Silizium (Si), Mangan (Mn), Schwefel (S) oder auch Phosphor (P) führt. Auch können durch Zugabe weiterer Elemente die Eigenschaften der so erzeugten Basislegierung optional weiter verändert werden. Beispiele hierfür umfassen Aluminium, (Al), Vanadium (V), Chrom (Cr), Kalzium (Ca), Silizium (Si), Niob (Nb), Titan (Ti), Nickel (Ni) und Molybdän (Mo). So kann beispielsweise durch Zugabe von Aluminium (Al), Silizium (Si), Kalzium (Ca) oder Kalziumverbindungen eine Desoxidation erzielt werden.

In dem zweiten Schritt des Legierens mit den Legierungselementen können diese dann in metallischer oder in chemisch gebundener Form der Basislegierung zugesetzt werden. Der Schritt des Legierens mit den Legierungselementen ist hierbei ein typischer Schritt der Sekundärmetallurgie, der beispielsweise in einem Pfannenofenverfahren nach dem Frischen durchgeführt werden kann. Hierbei können optional weitere Legierungselemente beigegeben werden, soweit dies noch notwendig oder erwünscht wird. Chrom, Tantal und Molybdän können so beispielsweise korrosionshemmend wirken. Der Schritt des Legierens mit den Legierungselementen erfolgt hierbei bei einer Temperatur von weniger als 1600 °C, wobei gegebenenfalls die Temperatur auch auf Werte von unter 1550 °C oder von unter 1500 °C beschränkt werden kann.

Im Rahmen der Sekundärmetallurgie können weitere Verfahrensschritte umfasst sein, etwa eine Entgasung durch eine Vakuumentgasung oder durch andere Verfahren. Daran können optional weitere mechanische, thermische oder andere Weiterverarbeitungsschritte, also etwa ein Walzen des Stahls, folgen.

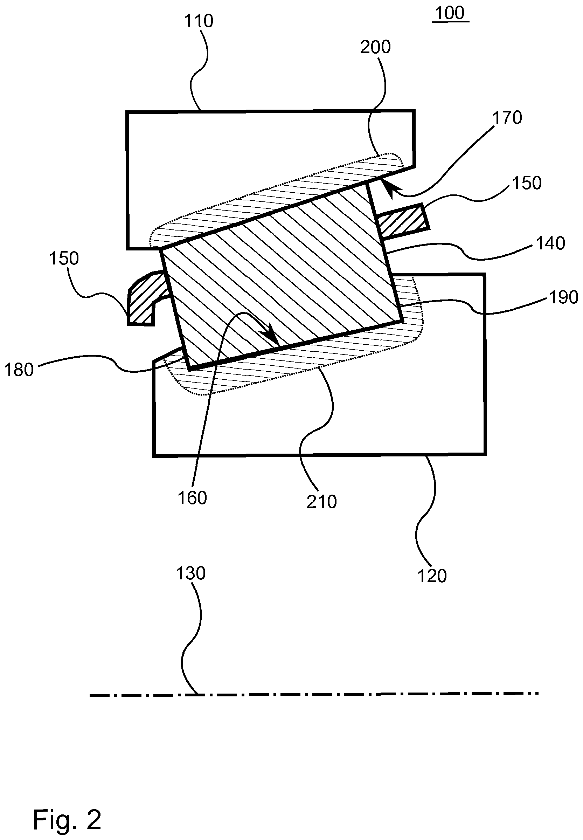

Fig. 2 zeigt einen Querschnitt durch ein Kegelrollenlager 100 für eine Großanlage, beispielsweise eine Windkraftanlage, eine Gezeitenkraftanlage, Walzwerk oder eine Baumaschine. Das Kegelrollenlager 100 umfasst einen Außenring 110 und einen Innenring 120, die in Fig. 2 bezogen auf eine Symmetrielinie 130 gezeigt sind, wobei die Symmetrielinie 130 mit der Achse des Kegelrollenlagers 100 zusammenfällt. Zwischen dem Innenring 120 und dem Außenring 110 ist eine Mehrzahl von kegelstumpfförmigen Wälzkörpern 140 angeordnet, die von einem optionalen Käfig 150 geführt werden.

Durch eine Relativbewegung des Innenrings 120 zu dem Außenring 110 rollen sich die Wälzkörper 140 an einer Lauffläche 160 des Innenrings 120 und einer Lauffläche 170 des Außenrings 110 ab. Zur seitlichen Führung der Wälzkörper 140 weist das Kegelrollenlager 100 Führungsborde auf. Der Innenring umfasst so einen ersten Bord 180 und einen zweiten Bord 190, während der hier gezeigte Außenring keine seitlichen Führungsborde aufweist.

Der Außenring 110 und der Innenring 120 stellen beide jeweils Bauteile gemäß Ausführungsbeispielen der vorliegenden Erfindung dar, wie es bereits als Bauteil 10 in Fig. 1 gezeigt wurde. Sie sind hierbei vollständig aus Stahl gefertigt, unterscheiden sich somit von dem in Fig. 1 gezeigten Bauteil 10 beispielsweise dadurch, dass das dort gezeigte Bauteil zumindest nur abschnittweise einen entsprechenden Stahl aufweist.

Ausgehend von den Laufflächen 160, 170 der beiden Wälzlagerringe 110, 120 weisen diese jeweils einen Randhärtungsbereich 200, 210 auf, in dem der Stahl der beiden Wälzlagerringe 110, 120 einer Randhärtung unterworfen wurde. Beide Randhärtungsbereiche 200, 210 erstrecken sich hierbei ausgehend von den Oberflächen der beiden Bauteile, also den beiden Laufflächen oder Laufbahnen 160, 170, wenigstens 5 mm in das jeweilige Bauteil hinein. Je nach Bedarf kann auch ein dickerer Randhärtungsbereich von 10 mm oder darüber erzeugt werden, der gerade bei hoch belasteten Bauteilen, wie den Wälzlagerringen von Großmaschinen, einer vorzeitigen Ermüdung entgegenwirkt und auch dem bei großen Wälzlagerringen höheren Aufmaß für die Hartbearbeitung (z. B. wegen Verzugs) Rechnung trägt. Aber auch im Bereich der Wälzkörper und anderer Bau- oder Maschinenteile sind Randhärtungsbereiche mit Randhärtungstiefen im beschriebenen Ausmaß aus unterschiedlichen Gründen häufig sehr willkommen.

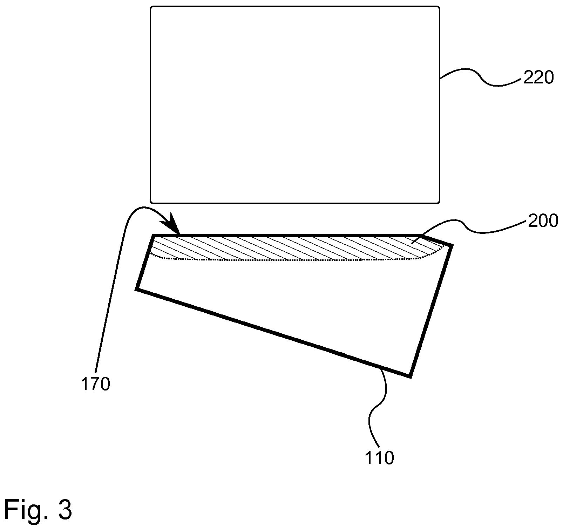

Fig. 3 illustriert am Beispiel des in Fig. 2 gezeigten Außenrings 110 die Erzeugung des Randhärtungsbereichs 200 mittels Induktionshärten. Zu diesem Zweck wird ein Induktor 220 über die zu härtende Oberfläche, also im vorliegenden Fall über die Lauffläche 170 geführt, während der Induktor 220 in dem Werkstück (Bauteil 10 bzw. Außenring 110) über ein magnetisches Wechselfeld Wirbelströme erzeugt. Zu diesem Zweck umfasst der Induktor 220 eine in Fig. 3 nicht gezeigte Spule, durch die ein Wechselstrom mit einer vorbestimmten, einstellbaren oder auch programmierbaren Frequenz zuschaltbar ist. Durch die Einstellung der Stromstärke des Stroms, also im Wesentlichen der Leistung des Induktors 220, durch die Festlegung der Frequenz des Wechselstroms und durch die Festlegung der Dauer der Einwirkung des Wechselfeldes wird eine bestimmte Wärmemenge durch elektrischen Stromfluss und Wärmeleitung in eine Oberflächenschicht des Werkstücks 110 eingebracht, die zu einer Aufheizung des Werkstücks führt. Um eine Beschädigung des Induktors 220 durch hohe Temperaturen zu vermeiden, kann dieser optional auch ein in Fig. 3 nicht gezeigtes Kühlsystem umfassen, also etwa eine Wasserkühlung.

Über die Frequenz kann aufgrund des Skin-Effekts eine Eindringtiefe des Wechselfeldes und damit eine Dicke des zu erzeugenden Randhärtungsbereichs bestimmt werden. Hierdurch kann somit eine Wärmemenge in das Werkstück (Außenring 110) unter seine Oberfläche (Lauffläche 170) eingebracht werden, durch die es zu dem thermisch induzierten Härten des Stahls kommt. Aufgrund der Wärmeeinwirkung kommt es dann in dem Randhärtungsbereich 170 zu einer Gefügeneubildung, wobei jedoch aufgrund der Verwendung des Stahls gemäß Ausführungsbeispielen der vorliegenden Erfindung eine Grobkornbildung im Austenit mit beim Abschrecken entstehenden großen Martensitnadeln bzw. -latten und entsprechenden ehemaligen AustenitKkorngrenzen im Wesentlichen unterbunden, zumindest jedoch reduziert werden kann, sodass die zuvor genannten Dicken der Randhärtungsbereiche zumindest ohne übermäßige Werkstoffschädigung (z. B. Grobkorn mit Korngrenzensegregation) erzielbar sind.

Durch den Induktor 220 können so beispielsweise Temperaturanstiege von mehr als 100 °C/s und darüber erzeugt werden. Untersuchungen haben hier gezeigt, dass bei Temperaturanstiegen zwischen 100 °C/s und 300 °C/s Körner mit einer ASTM-Kenngröße von 5 oder darüber, gegebenenfalls sogar von 6 oder 7 und darüber in dem Randhärtungsbereich 200 erzielbar sind.

Stähle, die bei Ausführungsbeispielen der vorliegenden Erfindung zum Einsatz kommen, sind so induktiv härtbar und können durch eine solche Härtung zumindest im Randbereich hochfest ausgeführt werden. Sie eignen sich daher als Stähle für Wälzlager und für andere Anwendungsgebiete, bei denen die aus ihnen gefertigten Bauteile starken dynamischen und/oder statischen Belastungen unterworfen werden. Bei Wälzlagern handelt es sich hierbei typischerweise um eine zyklische und/oder statische Druckbeanspruchung, wobei die verbesserte Härtbarkeit und Kornstabilität dem Verschleiß, der Ermüdung und dem spontanen Versagen entgegenwirken. Das Fehlen kritischer Zugspannungen und der hohe hydrostatische Druck im Hertzschen Kontakt lassen den gehärteten Stahl mikroplastisch fließen und führen zu einer etwa gegenüber einer vergleichbaren zyklischen Zug-Druck- oder Umlaufbiegebeanspruchung um Größenordnungen höheren Lebensdauer bei Wälzermüdung durch Überrollung.

Beim Induktionshärten kann optional auch ein Mehrfrequenzverfahren angewendet werden. Darüber hinaus kann die in Fig. 3 nicht gezeigte Aufnahme für das Werkstück (Außenring 110, Bauteil 10) optional geerdet sein, um die Aufheizung durch die im Werkstück angeworfenen Wirbelströme zu verbessern. Der Induktor 220 kann hierbei beispielsweise mit einer Frequenz im Bereich zwischen 1 kHz und 5 kHz bei einem Abstand von weniger als 20 mm von der zu härtenden Oberfläche (Laufbahn bzw. Lauffläche 170 und 160, Oberfläche 30) betrieben werden. Die zu verwendende Stromstärke bzw. Leistung hängt stark von der Geometrie und Größe des Bauteils ab.

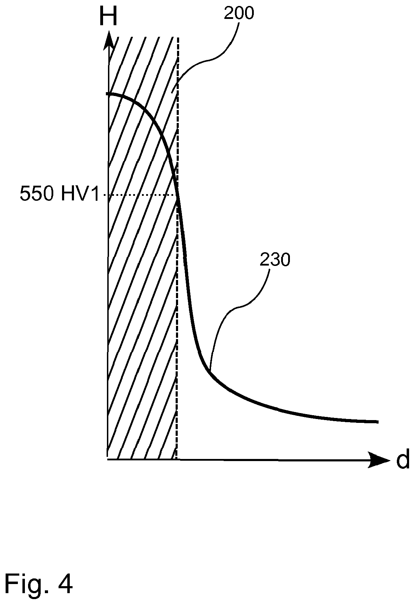

Fig. 4 zeigt eine schematisch vereinfachte Darstellung eines Härteverlaufs 230 (H = hardness) als Funktion einer Tiefe (d = depth) von der Oberfläche aus, also im Fall des in Fig. 1 gezeigten Bauteils 10 von der Oberfläche 30 und im Falle des in den Figuren 2 und 3 gezeigten Außenrings 110 von der Lauffläche 170 ausgehend vom Rand zum Kern. Ausgehend von der Oberfläche des Außenrings (d = 0) weist die Härte zunächst im Randhärtungsbereich 40 bzw. 200 im Wesentlichen einen ersten konstanten Wert auf, bevor sie außerhalb des Randhärtungsbereichs 40 bzw. 200 abnimmt und im Inneren des Werkstücks einem zweiten Wert zustrebt. Der erste Wert der Härte H liegt hierbei über dem des zweiten Werts, wobei der erste Wert auf die durchgeführte Randhärtung und der zweite Wert auf die Eigenschaften des zugrunde liegenden Stahls zurückzuführen sind. Der erste Wert wird also durch die Aufhärtbarkeit des Stahls bestimmt.

Die Härte kann beispielsweise nach Rockwell gemäß der HRC-Skala angegeben werden. Je nach verwendetem Stahl gemäß Ausführungsbeispielen der vorliegenden Erfindung können so Härten beginnend bei 20 HRC im Falle eines Stahls mit einem Kohlenstoffanteil von 0,25 Gew.-% bis hin zu 70HRC bei einem Stahl mit einem Kohlenstoffanteil von 1,55 Gew.-% erzielt werden. Die Härtbarkeit kann hierbei durch Stirnabschreckversuche nach Jominy bei verschiedenen Stirnflächenabständen gemessen werden.

Die resultierende Härte wird hierbei vorwiegend nicht zuletzt durch den Kohlenstoffanteil bewirkt, wobei der Bereich von 0,25 Gew.-% bis 1,55 Gew.-% für die Induktionshärtung und die Flammhärtung geeignet ist. Die weiteren Legierungsmetalle verbessern die Einhärtbarkeit und verhindern ein übermäßiges Kornwachstum, wobei bereits ein geringer Anteil von 0,01 Gew.-% und darüber des zweiten Legierungselements, der der Mikrolegierung zuzurechnen ist, kornstabilisierend wirkt. Dies gilt ebenso für höhere Anteile im Bereich zwischen 0,1 Gew.-% und 2 Gew.%. Durch das Zusammenwirken von Kohlenstoff und dem zweiten Legierungselement kann so auch bei einer längeren und/oder höher temperierten Wärmebehandlung das Gefüge des Stahls bei hoher resultierender Härte weitgehend stabil gehalten werden. Bei weiteren Referenzbeispielen kann der Anteil des zweiten Legierungselements auch wenigstens 0,2 Gewichtsprozent oder 0,25 Gewichtsprozent betragen.

Bei Referenzbeispielen kann der Anteil des entsprechenden zweiten Legierungselements auch über die vorgenannten Werte hinaus erhöht werden. Wird dieser beispielsweise auf Werte von wenigsten 0,5 Gewichtsprozent erhöht, kann dies beispielsweise im Fall von Tantal zusätzlich zu der Kornfeinbildung auch die Karbidbildung oder Karbidausbildung gegebenenfalls positiv beeinflussen.

Auch durch ein geeignetes optionales (Mikro-) Legieren mit weiteren Legierungselementen, also beispielsweise mit Tantal (Ta), Niob (Nb), Titan (Ti) oder Vanadium (V), kann das Kornwachstum bei der Wärmebehandlung (weiter) behindert wird. Typische Gehalte dieser Legierungselemente liegen zwischen 0,01 und 2 Gew.-%. Erfindungsgemäß können hierbei konventionelle induktiv härtbare Stähle, z. B. 50CrMo4 oder 43CrMo4, als Basislegierungen in der beschriebenen Weise zusätzlich (mikro-) legiert werden, um so z. B. 50CrMo4 +Nb oder 43CrMo4 +Ta zu erhalten.

Es wird hierbei vermutet, dass eingelagerte Karbide das Kornwachstum behindern, da diese als Hindernisse für die Korngrenzenbewegung und bei der Umwandlung in Austenit als Keime wirken und so die Kornbildung unterstützen können. Daher sind diese Stähle mit steigendem Legierungszusatz überhitzungsunempfindlicher als unlegierte Stähle mit gleichem Kohlenstoffgehalt. Dabei verhindern die eingelagerten Karbide ein übermäßiges Kornwachstum. Gerade Tantalkarbid (TaC) ist hier besonders vorteilhaft, da sich dieses im Vergleich zu anderen Karbiden nicht so schnell aufzulösen scheint. Über das Mikrolegieren mit einem Legierungselement kann so das Austenitkornwachstum beim Erwärmen auf Schmiedetemperatur durch die Bildung von Metallkarbiden gebremst werden. Die Schmiedetemperatur liegt hierbei häufig im Bereich der relevanten Austenitisierungstemperaturen beim Induktionshärten mit Kurzzeitaustenitisieren.

Insgesamt wird so der Werkstoff durch Mikrolegieren toleranter gegen Überhitzung beim Induktionshärten. Dadurch wird das verfügbare Prozessfenster erweitert und das Verfahren bezüglich Abweichungen unempfindlicher.

Neben dem in Fig. 1 gezeigten Bauteil sind bisher der in Fig. 2 gezeigte Innenring 110 sowie der Außenring 120 eines einreihigen Kegelrollenlagers beschrieben worden. Ausführungsbeispiele der vorliegenden Erfindung sind hierauf jedoch bei Weitem nicht beschränkt. Neben mehrreihigen (z. B. zweireihigen) Wälzlagerringen, Wälzkörpern (u. a. ein Zylinderrolle, Kugel und Kegelrolle) und anderen induktiv zu härtenden Wälzlagerkomponenten zählen zu den Ausführungsbeispielen ebenfalls andere Bauformen von Wälzlagern, also etwa Zylinderrollenlager, Tonnenlager, Kugellager, Vierpunktlager und Nadellager ebenso, wie Gleitlager, Zwischenringe und andere Bau- und Maschinenteile der rotativen und linearen Lagertechnik. Auch Bauteile anderer Disziplinen des Fahrzeug- und Maschinenbaus können als Ausführungsbeispiele der vorliegenden Erfindung umgesetzt werden. Hierzu zählen grundsätzlich alle Bauteile, die wenigstens einen Bereich aufweisen, der einer erhöhten Belastung unterworfen ist, sodass es sinnvoll ist, dort eine entsprechende Randhärtung von wenigstens 5 mm ausgehend vom Rand des betreffenden Bauteils vorzunehmen.

Wie bereits zuvor erläutert wurde, können Bauteile gemäß Ausführungsbeispielen der vorliegenden Erfindung vollständig oder teilweise, also abschnittsweise aus Stahl gefertigt sein. Anders ausgedrückt sind Ausführungsbeispiele in dieser Beziehung nicht auf eine vollständige Ausführung aus einem Material beschränkt. Beispiele hierfür sind Verbundbauteile, die einen entsprechend ausgeformten Abschnitt aufweisen, in dem Stahl gemäß einem Ausführungsbeispiel der vorliegenden Erfindung zusammen mit einem entsprechenden Randhärtungsbereich implementiert ist. Andere Bereiche des betreffenden Bauteils können beispielsweise aus einem anderen Metall, einer anderen Legierung oder einem anderen Stahl gefertigt sein. Eine Verbindung kann in diesen Fällen beispielsweise stoffschlüssig in Form einer Lötoder Schweißverbindung hergestellt werden. Aber auch andere Verbindungsmethoden sind hier denkbar, beispielsweise eine kraft- oder formschlüssige Verbindung oder auch eine Verklebung als weitere Form der stoffschlüssigen Verbindung. Diese Methoden können beispielsweise dann eingesetzt werden, wenn ein Verlöten oder Verschweißen nicht infrage kommt, wenn also die beteiligten Stoffe nicht löt- oder schweißbar sind. Beispiele können hierfür etwa Kunststoffe oder glasfaserverstärkte Werkstoffe sein. Bei Ausführungsbeispielen, die nicht vollständig aus einem Stahl gemäß einem Ausführungsbeispiel gefertigt sind, zumindest jedoch einen Abschnitt aufweisen, kann sich dieser ausgehend von der Oberfläche entlang einer Geraden derart erstrecken, dass die Gerade vollständig in dem Stahl verläuft, bis sie an einem (weiteren) Oberflächenabschnitt aus dem Bauteil austritt.

Bei Ausführungsbeispielen können das Bauteil bzw. sein Abschnitt, der den Stahl aufweist, gegebenenfalls weitere Materialien umfasst sein. So kann ein solches Bauteil auch vollständig oder in einem entsprechenden Abschnitt aus einem Material gefertigt sein, welches den Stahl umfasst. Ein solches Material kann beispielsweise ein faserverstärkter Stahl oder eine andere hybride Materialkombination umfassen, bei der Stahl gemäß einem Ausführungsbeispiel zum Einsatz kommt.

Ein Stahl gemäß einem Ausführungsbeispiel kann also beispielsweise ein Stahl zur Flamm- oder Induktionshärtung sein. Es kann sich alternativ oder ergänzend hierzu auch um einen Wälzlagerstahl handeln. Bei einem Stahl gemäß einem Ausführungsbeispiel kann dieser außer Eisen und Kohlenstoff sowie den zuvor genannten Legierungsstoffen keine weiteren Elemente mit einem jeweiligen Anteil von mehr als 0,2 Gewichtsprozent aufweisen, wobei ein Gesamtanteil der weiteren Elemente 10 Gewichtsprozent nicht übersteigt. Durch die Implementierung eines Ausführungsbeispiels kann gegebenenfalls eine verbesserte und/oder leichtere Randhärtung erzielbar sein.

Bei einem Referenzbeispiel eingesetzter Stahl kann beispielsweise Tantal mit einem Gewichtsanteil aufweisen, der größer als der 1-fache Gewichtsanteil von Niob ist. Ebenso kann bei einem Referenzbeispiel der Stahl nichtmetallische Einschlüsse gemäß ASTM E45 und ISO 4967 aufweisen, die maximal einem der in Tabelle 3 definierten Werte entspricht. Ebenso kann ein solcher Stahl nichtmetallische Einschlüsse gemäß DIN 50602:1985 aufweisen, die maximal einem der in Tabelle 4 definierten Werten entspricht. Ein Stahl, der bei einem Referenzbeispiel eingesetzt wird, kann wenigstens abschnittsweise ein Gefüge mit Körnern mit einer Kennzahl von 5 oder darüber gemäß ASTM aufweisen. Alternativ oder ergänzend kann er ferner eine Härtbarkeit mit wenigstens einem Härtewert bei wenigstens einem Abstandswert von einer Oberfläche aufweisen, wobei der wenigstens eine Härtewert in einem durch einen HRCₘₐₓ-Wert und einem HRCₘᵢₙ-Wert gegebenen Intervall liegt, wobei die HRCₘₐₓ- und HRCₘᵢₙ-Werte gegenüber den in Tabelle 2 angegebenen HRCₘₐₓ- und HRCₘᵢₙ-Werten um bis zu 2 oder 3 HRC-Stufen unter- oder überschritten werden dürfen. Ein Stahl kann so ein Stahl zur Flamm- oder Induktionshärtung sein. Ebenso kann er ergänzend oder alternativ ein Wälzlagerstahl sein.

Zu den möglichen Anwendungsgebieten von Ausführungsbeispielen der vorliegenden Erfindung zählen zunächst alle Großanlagen, bei denen einzelne Bauteile einer entsprechenden mechanischen Belastung unterworfen sind, die eine Randhärtung ratsam macht. Hierzu zählen Wind- und Gezeitenkraftanlagen ebenso, wie Generatoren, Baumaschinen, Kräne, Bagger, Transporter, Züge, Flugzeuge, Walzwerke und andere Maschinen. Grundsätzlich kann es auch ratsam sein, Ausführungsbeispiele in kleineren Anlagen und ihren Komponenten einzusetzen, da auch bei solchen Anlagen beispielsweise durch plötzliche Stoßbelastungen hohe Beanspruchungen auftreten können. Mikrolegierte kornstabile Stähle für eine induktive Wärmebehandlung gemäß Ausführungsbeispielen der vorliegenden Erfindung, sowie entsprechende Bauteile sind daher in einem weiten Feld von Anwendungen einsetzbar.

### Bezugszeichenliste

- 10: Bauteil
- 20: Abschnitt
- 30: Oberfläche
- 40: Randhärtungsbereich
- 100: Kegelrollenlager
- 110: Außenring
- 120: Innenring
- 130: Symmetrielinie
- 140: Wälzkörper
- 150: Käfig
- 160: Lauffläche
- 170: Lauffläche
- 180: erste Borde
- 190: zweite Borde
- 200: Randhärtungsbereich
- 210: Randhärtungsbereich
- 220: Induktor
- 230: Härteverlauf

## Patentansprüche

1. Bauteil (10; 110; 120), das wenigstens in einem Abschnitt (20) Stahl aufweist,
wobei sich der Abschnitt (20) von einer Oberfläche (20; 160; 170) des Bauteils (10; 110; 120) in ein Inneres des Bauteils (10; 110; 120) erstreckt,
wobei das Bauteil (10; 110; 120) in dem Abschnitt (20) eine Randhärtung (40; 200; 210) ausgehend von der Oberfläche (30; 160; 170) des Bauteils (10; 110; 120) aufweist, und
wobei der Stahl 50CrMo4 oder 43CrMo4 ist, der mit einem zusätzlichen Legierungselement legiert ist, wobei das zusätzliche Legierungselement Tantal, Niob, Titan oder Vanadium ist, und wobei der Stahl das zusätzliche Legierungselement mit einem Anteil zwischen 0,01 und 2 Gewichtsprozent aufweist.

2. Bauteil (10; 110; 120) nach Anspruch 1, bei dem sich die Randhärtung (40; 200; 210) wenigstens 5 mm in das Innere des Bauteils (10; 110; 120) erstreckt.

3. Bauteil (10; 110; 120) nach einem der vorhergehenden Ansprüche, bei dem das Bauteil eine Wälzlagerkomponente, beispielsweise eine Wälzlagerkomponente einer Großmaschine, beispielsweise einer Windkraftanlage, einer Gezeitenkraftanlage, eines Generators, einer Baumaschine, eines Transporters, eines Zugs, eines Walzwerks oder eines Flugzeugs ist.

4. Verfahren zum Herstellen eines Bauteils, umfassend:
- Bereitstellen eines Bauteils (10; 110; 120), das wenigstens in einem Abschnitt (20) Stahl aufweist, wobei sich der Abschnitt (20) von einer Oberfläche (30; 160; 170) des Bauteils (10; 110; 120) in ein Inneres des Bauteils (10; 110; 120) erstreckt, wobei der Stahl 50CrMo4 oder 43CrMo4 ist, der mit einem zusätzlichen Legierungselement legiert ist, wobei das zusätzliche Legierungselement Tantal, Niob, Titan oder Vanadium ist, und wobei der Stahl das zusätzliche Legierungselement mit einem Anteil zwischen 0,01 und 2 Gewichtsprozent aufweist;
- Durchführen einer Randhärtung in dem Abschnitt (20), sodass sich ein Randhärtungsbereich (40; 200; 210) in dem Abschnitt des Bauteils (10; 110; 120) ausgehend von der Oberfläche (30; 160; 170) erstreckt.

5. Verfahren nach Anspruch 4, bei dem das Durchführen der Randhärtung ein induktives Randhärten umfasst.

6. Verfahren nach einem der Ansprüche 4 oder 5, wobei das Durchführen der Randhärtung derart ausgestaltet ist, dass sich der Randhärtungsbereich (40; 200; 210) wenigstens 5 mm in ein Inneres des Bauteils (10; 110; 120) ausgehend von der Oberfläche (30; 160; 170) erstreckt.

## Claims

1. Component (10; 110; 120) which comprises steel at least in a section (20),
wherein the section (20) extends from a surface (20; 160; 170) of the component (10; 110; 120) into an interior of the component (10; 110; 120),
wherein the component (10; 110; 120) has, in the section (20), surface hardening (40; 200; 210) extending from the surface (30; 160; 170) of the component (10; 110; 120), and
wherein the steel is 50CrMo4 or 43CrMo4 which is alloyed with an additional alloying element, where the additionally alloying element is tantalum, niobium, titanium or vanadium and where the steel comprises the additional alloying element in a proportion of from 0.01 to 2 percent by weight.

2. Component (10; 110; 120) according to Claim 1, wherein the surface hardening (40; 200; 210) extends at least 5 mm into the interior of the component (10; 110; 120).

3. Component (10; 110; 120) according to either of the preceding claims, wherein the component is a roller bearing component, for example a roller bearing component of a large machine, for example a wind power plant, a tidal power plant, a generator, a construction machine, a transporter, a train, a rolling machine or an aircraft.

4. Process for producing a component, comprising:
- provision of a component (10; 110; 120) which comprises steel at least in a section (20), wherein the section (20) extends from a surface (30; 160; 170) of the component (10; 110; 120) into an interior of the component (10; 110; 120), wherein the steel is 50CrMo4 or 43CrMo4 which is alloyed with an additional alloying element, where the additional alloying element is tantalum, niobium, titanium or vanadium and where the steel comprises the additional alloying element in a proportion of from 0.01 to 2 percent by weight;
- carrying out surface hardening in the section (20) so that a surface hardening region (40; 200; 210) extends from the surface (30; 160; 170) in the section of the component (10; 110; 120) .

5. Process according to Claim 4, wherein the carrying-out of the surface hardening comprises inductive surface hardening.

6. Process according to either Claim 4 or 5, wherein the carrying-out of the surface hardening is configured in such a way that the surface hardening region (40; 200; 210) extends from the surface (30; 160; 170) for at least 5 mm into an interior of the component (10; 110; 120).

## Revendications

1. Pièce (10 ; 110 ; 120) présentant de l'acier dans au moins une partie (20),
la partie (20) s'étendant à l'intérieur de la pièce (10 ; 110 ; 120) en partant d'une surface (20 ; 160 ; 170) de la pièce (10 ; 110 ; 120),
la pièce (10 ; 110 ; 120) présentant dans la partie (20) une trempe superficielle (40 ; 200 ; 210) partant de la surface (30 ; 160 ; 170) de la pièce (10 ; 110 ; 120), et
l'acier étant du 50CrMo4 ou du 43CrMo4 qui est allié avec un élément d'addition supplémentaire, l'élément d'addition supplémentaire étant du tantale, du niobium, du titane ou du vanadium, et l'acier présentant l'élément d'addition supplémentaire avec une proportion comprise ente 0,01 et 2 pourcent en poids.

2. Pièce (10 ; 110 ; 120) selon la revendication 1, dans laquelle la trempe superficielle (40 ; 200 ; 210) s'étend sur au moins 5 mm à l'intérieur de la pièce (10 ; 110 ; 120).

3. Pièce (10 ; 110 ; 120) selon l'une quelconque des revendications précédentes, dans laquelle la pièce est un composant de palier à roulement, par exemple un composant de palier de roulement d'une grande machine, par exemple d'une installation éolienne, d'une centrale marémotrice, d'un générateur, d'une machine de chantier, d'un véhicule de transport, d'un train, d'un laminoir ou d'un avion.

4. Procédé de fabrication d'une pièce, comprenant les étapes consistant à :
- fournir une pièce (10 ; 110 ; 120) qui présente de l'acier dans au moins une partie (20), la partie (20) s'étendant à l'intérieur de la pièce (10 ; 110 ; 120) en partant d'une surface (30 ; 160 ; 170) de la pièce (10 ; 110 ; 120), l'acier étant du 50CrMo4 ou du 43CrMo4 qui est allié avec un élément d'addition supplémentaire, l'élément d'addition supplémentaire étant du tantale, du niobium, du titane ou du vanadium, et l'acier présentant l'élément d'addition supplémentaire avec une proportion comprise ente 0,01 et 2 pourcent en poids ;
- effectuer une trempe superficielle dans la partie (20) de sorte qu'une zone de trempe superficielle (40 ; 200 ; 210) s'étend dans la partie de la pièce (10 ; 110 ; 120) en partant de la surface (30 ; 160 ; 170).

5. Procédé selon la revendication 4, dans lequel l'exécution de la trempe superficielle comprend une trempe superficielle par induction.

6. Procédé selon l'une quelconque des revendications 4 ou 5, dans lequel l'exécution de la trempe superficielle est réalisée de telle sorte que la zone de trempe superficielle (40 ; 200 ; 210) s'étend sur au moins 5 mm à l'intérieur de la pièce (10 ; 110 ; 120) en partant de la surface (30 ; 160 ; 170).
